# EUROPÄISCHE PATENTSCHRIFT

(11) **EP 1 009 710 B1**
(45) Veröffentlichungstag und Bekanntmachung des Hinweises auf die Patenterteilung: **31.10.2001**
(21) Anmeldenummer: 99917927.8
(22) Anmeldetag: 30.03.1999
(51) Int. Cl.: B67C 3/24, B67C 3/00, B67B 3/24, B65B 43/60, A23L 3/00

(54) **VORRICHTUNG ZUM EINBRINGEN UND/ODER AUSBRINGEN VON BEHÄLTERN IN BZW. AUS EINEM BEHANDLUNGSRAUM**
DEVICE FOR INTRODUCING RECEPTACLES INTO AND/OR REMOVING RECEPTACLES FROM A TREATMENT AREA
DISPOSITIF POUR INTRODUIRE ET/OU EXTRAIRE DES RECIPIENTS DANS/HORS D'UN ESPACE DE TRAITEMENT

(30) Priorität: 11.04.1998 DE 19816239
(43) Veröffentlichungstag der Anmeldung: 21.06.2000
(73) Patentinhaber: KRONES AG, 93068 Neutraubling (DE)
(72) Erfinder: PICKEL, Herbert, D-93073 Neutraubling (DE); HUMELE, Heinz, D-93107 Thalmassing (DE)
(86) Internationale Anmeldenummer: EP9902193
(87) Internationale Veröffentlichungsnummer: WO9952810

(56) Entgegenhaltungen:
- EP-A- 0 659 683
- DE-A- 2 527 363
- US-A- 1 766 018
- US-A- 2 660 513
- US-A- 3 975 260
- US-A- 4 723 392
- US-A- 5 457 939

## Beschreibung

Die Erfindung betrifft eine Vorrichtung gemäß dem Oberbegriff des Anspruchs 1.

Derartige Vorrichtungen sind in verschiedenen Ausführungen bekannt, wobei das Einführen bzw. Ausführen der Behälter in bzw. aus dem Schleusenrad durch rotierende Sternräder in Verbindung mit stationären Führungsschienen (US-PS 5 457 939), durch Schwenkarme mit stationären Schwenkachsen (US-PS 2 660 513) oder durch im Schleusenrad gelagerte, gesteuerte Radialschieber in Verbindung mit stationären Führungsschienen (US-PS 1 766 018) erfolgt. Bei den bekannten Vorrichtungen stehen die Behälter während des Transports im Schleusenrad mit ihren Bodenflächen auf entsprechenden Stützflächen der Kammern und sind ansonsten in den Kammern frei beweglich. Sie können daher unter Einfluss der Massenkräfte und ggf. auf die Kammern einwirkender Gaszu- oder -ableitung ohne weiteres ihre Lage ändern. Dies führt zu Problemen beim Ausführen der Behälter aus den Kammern, kann Beschädigungen der Behälter verursachen und ist überhaupt nur möglich, wenn die Behälter eine ausreichende Standfestigkeit aufweisen. Außerdem sind keine hohen Transportleistungen möglich.

Der Erfindung liegt die Aufgabe zugrunde, bei einer gattungsgemäßen Vorrichtung mit einfachen Mitteln auch beim Behandeln von Behältern mit geringer Standfestigkeit die Transportleistung und Betriebssicherheit wesentlich zu erhöhen und Beschädigungen der Behälter zuverlässig zu unterbinden.

Diese Aufgabe wird erfindungsgemäß durch die im Kennzeichen des Anspruchs 1 angegebenen Merkmale gelöst.

Bei einer erfindungsgemäßen Vorrichtung wird durch die in den Schleusenkammern angeordneten Greifer eine zuverlässige Stabilisierung und Zentrierung der Behälter im Schleusenrad ermöglicht. Ein Kippen der Behälter, eine Beschädigung durch Anschlagen an den Kammerwänden oder eine fehlerhafte Übergabe an nachgeschaltete Transportorgane wird zuverlässig verhindert und es sind sehr hohe Transportleistungen möglich.

Für die Ausbildung der Greifer in den Schleusenkammern sind verschiedene Gestaltungen möglich. Einen besonders einfachen Aufbau mit zuverlässiger Fixierung der Behälter erlauben die Weiterbildungen der Erfindung gemäß den Ansprüchen 3 bis 6. Die Weiterbildungen der Erfindung nach den Ansprüchen 2, 7 und 8 ermöglichen auch bei besonders leichtgewichtigen und instabilen Behältern wie PET-Flaschen einen zuverlässigen Transport mit hoher Geschwindigkeit. Besonders. zweckmäßig ist es, wenn die mit dem Schleusenrad zusammenwirkenden Transportorgane mit Klammern zur stabilen Halterung der Behälter versehen sind, wodurch auch bei höchsten Leistungen ein zuverlässiges Ein- und Ausführen der Behälter in bzw. aus dem Schleusenrad möglich wird. Entsprechende Weiterbildungen der Erfindung sind in den Ansprüchen 9 bis 15 angegeben.

Im Nachstehenden wird ein Ausführungsbeispiel der Erfindung anhand der Zeichnungen beschrieben. Es zeigen:
- Fig. 1: die Draufsicht auf eine Vorrichtung zum Einbringen und Ausbringen von Flaschen in und aus einem Behandlungsraum, teilweise im Schnitt
- Fig. 2: den Schnitt A-B nach Fig. 1,
- Fig. 3: die vergrößerte Draufsicht auf eine einzelne Klammer eines Sternrads,
- Fig. 4: eine vergrößerte Draufsicht auf einen Greifer des Schleusenrads.

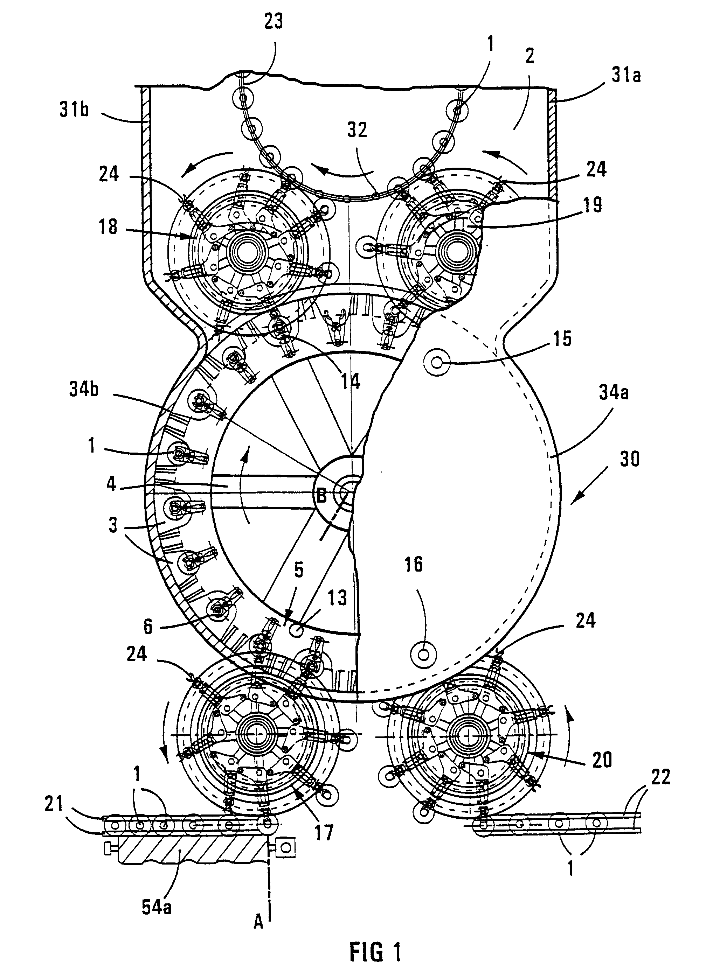

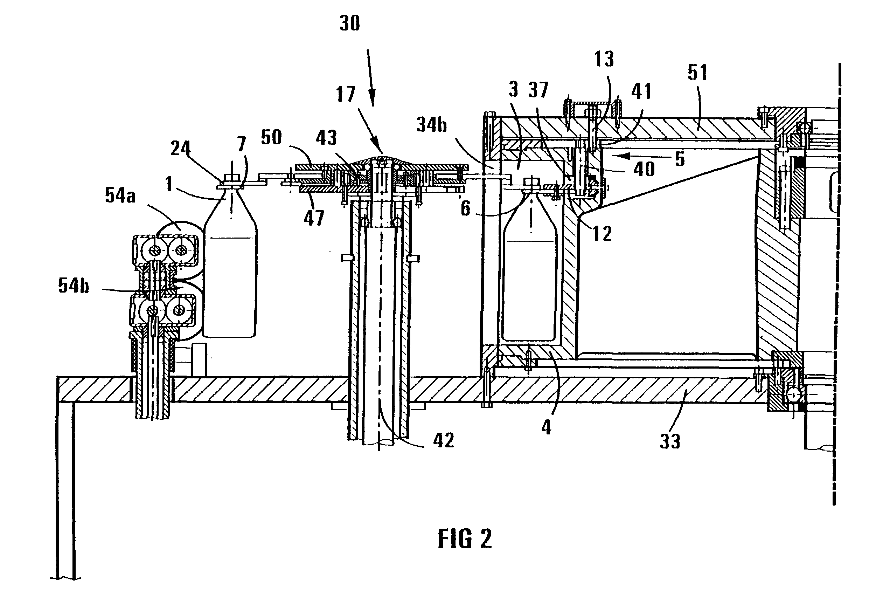

Die insgesamt mit 30 bezeichnete Vorrichtung nach Fig. 1 bis 4 ist zum Einbringen und Ausbringen von Behältern in Form von PET-Flaschen, im Nachstehenden kurz Flaschen 1 genannt, in bzw. aus einem unter Hochvakuum stehenden Behandlungsraum 2 eingerichtet, in welchem die Flaschen 1 zwecks Erhöhung der Barriereeigenschaften beschichtet werden. Der Behandlungsraum 2 ist u.a. durch Wände 31 hermetisch von der Umgebung abgeschlossen und weist einen kontinuierlich umlaufenden Förderer 23 mit in die Öffnung der Flaschen 1 einführbaren Dornen 32 auf, welcher die Flaschen 1 an den nicht gezeigten Beschichtungseinrichtungen vorbeibewegt.

Die Vorrichtung 30 besitzt eine horizontale Grundplatte 33, an deren Oberseite ein zentrales Schleusenrad 4 sowie insgesamt vier mit diesem zusammenarbeitende Sternräder 17, 18, 19, 20 mit jeweils senkrechter Drehachse gelagert sind. Durch unterhalb der Grundplatte 33 angeordnete, nicht gezeigte Antriebsorgane werden das Schleusenrad 4 und die Sternräder 17 bis 20 synchron zueinander sowie synchron zum Förderer 23 kontinuierlich in Pfeilrichtung angetrieben, so dass sie im wesentlichen nach Art von Zahnrädern miteinander kämmen.

Das Schleusenrad 4 ist am Umfang mit nur radial nach außen hin offenen und ansonsten gasdicht geschlossenen Schleusenkammern 3 ausgestattet, deren Höhe, Tiefe und Breite geringfügig größer ist als die größte zu verarbeitende Flasche 1. Die radial nach außen weisenden, die Schleusenkammern 3 begrenzenden Flächen des Schleusenrads 4 liegen in einer konzentrisch zu dessen Drehachse angeordneten Zylinderfläche und wirken mit entsprechend zylindrisch gekrümmten Schleusenwänden 34a und 34b zusammen, die gasdicht in die Wände 31a und 31b des Behandlungsraums 2 übergehen. Durch das Schleusenrad 4 und die Schleusenwände 34a, 34b, die an der Unterseite mit der Grundplatte 33 und an der Oberseite mit einer Deckplatte 51 starr verbunden sind, wird eine rotierende Schleuse gebildet, deren Schleusenkammern in ihrem dem Behandlungsraum 2 benachbarten Bereich zu diesem und am gegenüberliegenden Umlaufbereich zur Umgebung hin offen und in den beiden dazwischenliegenden Umlaufbereichen sowohl vom Behandlungsraum 2 als auch von der Umgebung getrennt sind. Durch nicht gezeigte Dichtungen kann die Dichtfunktion zwischen dem Schleusenrad 4 und den Schleusenwänden 34, 35 verbessert werden. Außerdem können die Schleusenkammern 3 im Bereich der Schleusenwände 34a, 34b mit Leitungen zur Gaszufuhr und/oder Gasabfuhr verbunden werden.

Jede Schleusenkammer 3 weist einen eigenen Greifer 6 auf, mit dem die Flaschen 1 während ihres Transports mit dem Schleusenrad 4 zentriert und fixiert werden und zwar hängend ohne Bodenunterstützung und ohne Kontakt mit den Wänden der Schleusenkammern 3. Jeder Greifer 6 weist zwei im wesentlichen parallele, nach Art einer Greifzange angeordnete Schwenkhebel 8, 9 auf, die in der horizontalen Umlaufebene des Schleusenrads 4 und im wesentlichen radial zu dessen Drehachse angeordnet sind. Die beiden Schwenkhebel 8, 9 sind mittels Lagerbolzen 35, 36 auf einer gemeinsamen Stützplatte 12 schwenkbar gelagert. Die Stützplatte 12 ihrerseits ist in horizontaler, radialer Ausrichtung in einer Ausnehmung 37 der zugehörigen Schleusenkammer 3 mittels einer Schraube lösbar sowie gasdicht befestigt.

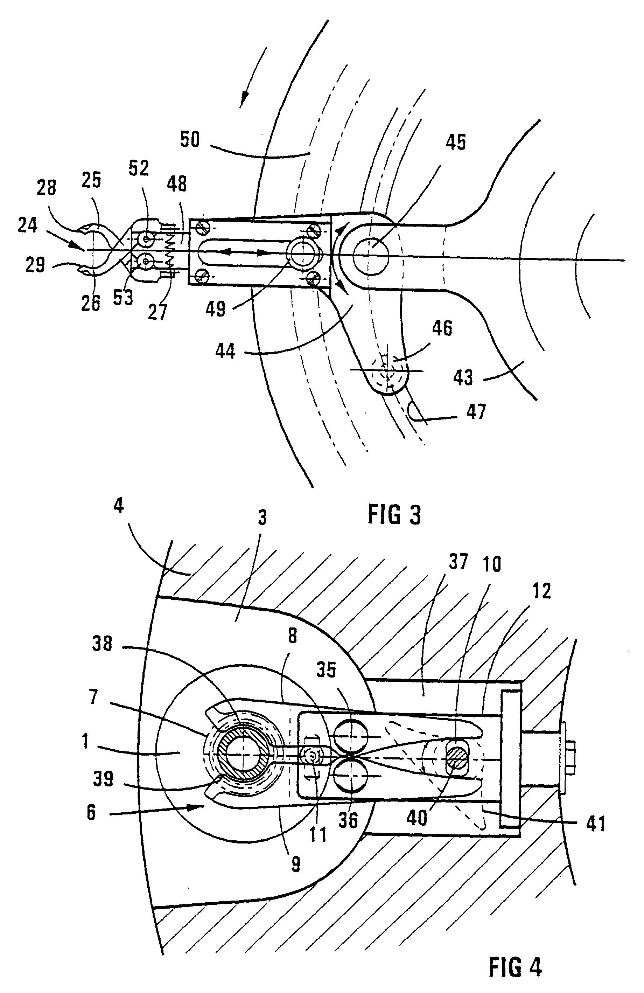

Wie insbesondere die Fig. 4 zeigt, liegen die durch die Lagerbolzen 35, 36 definierten Schwenkachsen in etwa in der Mitte der Schwenkhebel 8, 9 und unterteilen diese in einen nch außen weisenden Greifarm und in einen nach innen weisenden Gegenarm. Zwischen die Greifarme ist ein elastisches Mittel 11 in Form eines Gummikissens eingesetzt, das die Greifarme auseinanderdrückt und damit die Greifer 6 zu öffnen sucht. An den freien Enden der Greifarme sind in etwa viertelkreisförmige Aussparungen 38, 39 ausgebildet, die an den Durchmesser der Flaschen 1 im zu ergreifenden Bereich angepasst sind. Dies ist im Ausführungsbeispiel der Hals der Flasche 1 unmittelbar unter einem am Flaschenkopf ausgebildeten Halskragen 7 oder Tragring. Bei geschlossenem Greifer 6 umfassen die beiden Aussparungen 38, 39 den Flaschenhals um mehr als 180 Grad und liegen mit einer bestimmten Kraft an diesem an, so dass die betreffende Flasche 1 sowohl kraftschlüssig als auch formschlüssig gehalten wird. Auch bei hohen Transportgeschwindigkeiten, starken Beschleunigungen usw. wird so ein absolut zuverlässiges Fixieren auch extrem kippgefährdeter Flaschen 1 in den Schleusenkammern 3 erreicht, ohne Abstützung im Bodenbereich.

Das Öffnen und Schließen der Greifer 6 an den gewünschten Stellen der Umlaufbahn des Schleusenrads 4 erfolgt durch eine insgesamt mit 5 bezeichnete Steuereinrichtung, deren Aufbau im folgenden beschrieben wird: Zwischen den Gegenarmen jedes Paares von Schwenkhebeln 8, 9 ist ein Steuernocken 10 drehbar gelagert. Steht dieser im wesentlichen radial zur Drehachse des Schleusenrads 4 (Öffnungsposition), so können sich die Gegenarme unter Einwirkung des elastischen Mittels 11 maximal annähern und der Greifer 6 ist geöffnet. Steht dagegen der Steuernocken 10 im wesentlichen tangential zur Drehachse des Schleusenrads 4 (Schließposition), wie in Fig. 4 gezeigt ist, so spreizt er die Gegenarme maximal auseinander, wodurch die Greifarme mit den Aussparungen 38, 39 maximal angenähert werden und der Greifer 6 somit geschlossen ist. Jeder Steuernocken 10 ist am unteren Ende einer Steuerwelle 40 befestigt, die parallel zur Drehachse des Schleusenrads 4 drehbar in diesem gelagert ist und nach oben etwas übersteht. Am überstehenden Ende ist ein Steuerhebel 41 befestigt, durch den der Steuernocken 10 zwischen seiner Öffnungsposition und seiner Schließposition verschwenkt werden kann, die beide selbsthemmend stabilisiert sind.

Die Steuerhebel 41 arbeiten mit vier stationären, bolzenartigen Anschlägen 13 bis 16 zusammen, die in der das Schleusenrad 4 an der Oberseite abdeckenden Deckplatte 51 befestigt sind und in die Umlaufbahn der Steuerhebel 41 hineinragen. Die Steuerhebel 41 und die Anschläge 13 bis 16 befinden sich in der normalen Atmosphäre, genauso wie der ringförmige Raum des Schleusenrads 4 zwischen dessen Speichen innerhalb der Schleusenkammern 3. Die Steuerwellen 40 sind daher gasdicht abgedichtet und erlauben somit keinen Gasaustausch zwischen den Schleusenkammern 3 und der Umgebung.

Die vier Sternräder 17 bis 20 weisen den gleichen Grundaufbau auf, der im Nachstehenden anhand des ersten Sternrads 17 beschrieben wird: Auf einer senkrechten Antriebswelle 42 ist eine horizontale Sternplatte 43 befestigt, an der gleichmäßig über den Umfang verteilt acht Winkelhebel 44 um parallel zur Antriebswelle 42 angeordnete Achsen 45 schwenkbar gelagert sind. Am innenliegenden Schenkel jedes Winkelhebels 44 ist eine erste Kurvenrolle 46 gelagert, die in eine erste Nutkurve 47 eingreift. Diese ist unterhalb der Sternplatte 43 stationär angeordnet und steuert die Schwenkbewegung der Winkelhebel 44 während einer Rotation der Sternplatte 43.

Am äußeren Schenkel jedes Winkelhebels 44, der in etwa radial zur Antriebswelle 42 verläuft, ist ein Schieber 48 längsverschiebbar gelagert. Dieser trägt eine zweite Kurvenrolle 49, die in eine zweite Nutkurve 50 eingreift. Diese ist über der Sternplatte 43 stationär angeordnet und steuert die Radialbewegung der Schieber 48. Am radial nach außen weisenden, aus dem Winkelhebel 44 herausstehenden Ende jedes Schiebers 48 ist eine Klammer 24 angeordnet. Diese weist zwei nach Art einer Schere angeordnete Schwenkarme 25, 26 auf, die in der horizontalen Umlaufebene des Sternrads liegen. Die Schwenkarme 25, 26 sind mittels Lagerbolzen 52, 53 schwenkbar an dem Schieber 48 gelagert und werden mittels eines elastischen Mittels 27 in Form einer Zugfeder im Schließsinne vorgespannt. Die radial nach außen weisenden Schenkel der Schwenkarme 25, 26 sind viertelkreisartig gebogen und an den Durchmesser des über mehr als 180 Grad zu erfassenden Bereichs der Flaschen 1 angepasst. Im Ausführungsbeispiel ist dies die Einschnürung zwischen der Oberseite des Halskragens 7 und dem unteren Rand des Gewindes am Flaschenkopf. An dieser Stelle ist ein zuverlässiges Ergreifen und Halten der Flaschen 1 durchführbar, ohne dass diese in axialer Richtung durchrutschen. Auch im Bereich der Sternräder 17 bis 20 erfolgt der Transport der Flaschen 1 ohne Bodenabstützung, wodurch keine Garniturenteile für unterschiedliche Flaschenhöhen erforderlich sind und eine Beschädigung der Flaschenoberfläche verhindert wird.

Während die Greifer 6 durch ihre Steuereinrichtung 5 mittelbar betätigt werden, werden die Klammern 24 unmittelbar durch die Flaschen 1 betätigt. Hierzu sind die freien Enden der Schwenkarme 25, 26 mit abgeschrägten Steuerflächen 28, 29 versehen, welche beim Einpressen einer Flasche 1 zwischen die Schwenkarme 25, 26 diese entgegen der Kraft des elastischen Mittels 27 auseinanderspreizen, bis die Flasche 1 vollständig zwischen die Schwenkarme 25, 26 eingeschnappt ist. Umgekehrt werden die Schwenkarme 25, 25 beim Herausziehen einer Flasche 1 entgegen der Kraft des elastischen Mittels 27 aufgrund ihrer viertelkreisförmigen Form wiederum geöffnet, bis die Flasche 1 vollständig herausgeschnappt ist.

Wie die Fig. 1 zeigt, liegt das erste Sternrad 17 außerhalb des Behandlungsraums 2 in der normalen Atmosphäre. Es übernimmt die Flaschen 1 von einem Zuförderer 21 in Form eines Luftförderers, in dessen Endbereich die Flaschen 1 durch zwei parallele, synchron zum Sternrad 17 angetriebene Einlaufschnecken 54a, 54b, auf Abstand gebracht und eingetaktet werden. Dabei werden durch eine kombinierte Schwenk- und Radialbewegung der Schieber 48, gesteuert durch die beiden Nutkurven 47 und 50, die Klammern 24 auf die Flaschen 1 aufgeschnappt. Anschließend werden die Flaschen 1 im ersten Sternrad 17 durch eine überwiegende Schwenkbewegung der Schieber 48 leicht beschleunigt bzw. auf einen größeren Abstand gebracht und schließlich gezielt in die Öffnungen der Schleusenkammern 3 eingeführt und exakt in die geöffneten Greifer 6 eingebracht. Bei Erreichen der Endposition werden die Greifer 6 durch den Anschlag 13 in der bereits beschriebenen Weise geschlossen wonach die Klammern 24 durch eine überwiegende Radialbewegung von den Flaschen 1 abgezogen und aus den Schleusenkammern 3 herausgeführt werden. Da die Greifer 6 unterhalb des Halskragens und die Klammern 24 überhalb des Halskragens 7 an den Flaschen 1 angreifen, ist eine problemlose Übergabe zwischen diesen Elementen möglich.

Das vierte Sternrad 20 liegt wie das benachbarte erste Sternrad 17 außerhalb des Behandlungsraums 2 in der normalen Atmosphäre. Es übernimmt die Flaschen 1 vom Schleusenrad 4 und übergibt sie an einen Abförderer 22 in Form eines Luftförderers. Dabei werden durch entsprechende Steuerung der Schieber 48 mittels der Nutkurven 47 und 50 die Klammern 24 auf die noch von den Greifern 6 in den Schleusenkammern 3 gehaltenen Flaschen 1 aufgeschnappt, worauf die Greifer 6 durch den Anschlag 16 in der bereits beschriebenen Weise geöffnet werden. Daraufhin werden die Flaschen 1 im Sternrad 20 verzögert bzw. ihr Abstand wird verringert, bis sie mit relativ kleinem Abstand in den Abförderer 22 eingeschoben werden.

Das zweite Sternrad 18 und das dritte Sternrad 19 liegen benachbart innerhalb des Behandlungsraums 2. Das zweite Sternrad 18 übernimmt die Flaschen 1 von den Greifern 6 des Schleusenrads 4 und übergibt sie mit verringertem Abstand und verringerter Geschwindigkeit an die Dorne 32 des Förderers 23. Dabei erfolgt das Öffnen der Greifer 6 durch den Anschlag 14. Das dritte Sternrad 19 übernimmt die Flaschen 1 von den Dornen 32 des Förderers 23 und übergibt sie mit vergrößertem Abstand und vergrößerter Geschwindigkeit an die Greifer 6 des Schleusenrads 4. Dabei erfolgt das Schließen der Greifer 6 durch den Anschlag 15. Auch im Bereich der Sternräder 18 und 19 erfolgt die gewünschte Veränderung von Abstand und Geschwindigkeit der Flaschen 1 bzw. die Anpassung zwischen der unterschiedlichen Teilung und Geschwindigkeit des Schleusenrads 4 einerseits und des Förderers 23 andererseits durch entsprechende Gestaltung der beiden Nutkurven 47 und 50, genauso wie die überwiegende Radialbewegung zum Aufschnappen bzw. Abschnappen von den Flaschen 1.

## Patentansprüche

1. Vorrichtung zum Einbringen und/oder Ausbringen von Behältern (1) in bzw. aus einem Behandlungsraum mit mindestens einem drehbaren, am Umfang mit nach außen hin offenen Schleusenkammern (3) für die Behälter versehenen Schleusenrad (4), **dadurch gekennzeichnet, dass** das Schleusenrad (4) mit unmittelbar durch die Behälter (1) und/oder mittelbar durch eine Steuereinrichtung (5) betätigbaren Greifern (6) versehen ist, welche die Behälter in den Schleusenkammern (3) vorübergehend fixieren.

2. Vorrichtung nach Anspruch 1, **dadurch gekennzeichnet, dass** die Greifer (6) derart angeordnet sind, dass beim Transport von PET-Flaschen, diese ohne Bodenabstützung hängend in den Schleusenkammern (3) gehalten werden, vorzugsweise ohne Kontakt mit den Kammerwänden.

3. Vorrichtung nach Anspruch 1 oder 2, **dadurch gekennzeichnet, dass** jeder Greifer (6) mindestens zwei nach Art einer Greifzange angeordnete Schwenkhebel (8, 9) aufweist, die im wesentlichen parallel zur Umlaufebene des Schleusenrads (4) angeordnet sind und zumindest teilweise in die zugehörige Schleusenkammer (3) hineinragen.

4. Vorrichtung nach Anspruch 3, **dadurch gekennzeichnet, dass** zwischen den Schwenkhebeln (8, 9) jedes Greifers (6) ein drehbarer Steuernocken (10) und ein elastisches Mittel (11) angeordnet sind, die zusammen die Öffnungs-und/oder Schließbewegung der Greifer (6) bewirken.

5. Vorrichtung nach Anspruch 3 oder 4, **dadurch gekennzeichnet, dass** die Schwenkhebel (8, 9) eines Greifers (6) auf einer Stützplatte (12) gelagert sind, die ihrerseits vorzugsweise lösbar am Schleusenrad (4) im Bereich der Innenwand der zugehörigen Tasche (3) befestigt ist.

6. Vorrichtung nach Anspruch 4 oder 5, **dadurch gekennzeichnet, dass** die Steuernocken (10) durch stationär an der Umlaufbahn des Schleusenrads (4) angeordnete Anschläge (13 bis 16) geöffnet und/oder geschlossen werden, wobei die Greifer (6) im Umlaufbereich zwischen den Anschlägen (13 bis 16) durch die Steuernocken (10) und/oder die elastischen Mittel (11) in ihrer Öffnungs- bzw. Schließposition stabilisiert sind.

7. Vorrichtung nach einem der Ansprüche 1 bis 6, **dadurch gekennzeichnet, dass** die Greifer (6) derart angeordnet sind, dass sie beim Transport von PET-Flaschen formschlüssig und/oder kraftschlüssig am Umfangsbereich der Behälter (1) angreifen, vorzugsweise im Hals- oder Kopfbereich.

8. Vorrichtung nach Anspruch 7, **dadurch gekennzeichnet, dass** die Greifer (6) beim Transport von PET-Flaschen (1) unterhalb eines am Kopfbereich vorgesehenen Tragrings oder Halskragens (7) angreifen.

9. Vorrichtung nach einem der Ansprüche 1 bis 8, **dadurch gekennzeichnet, dass** ein einziges Schleusenrad (4) vorgesehen ist, dass sowohl das Einbringen der Behälter (1) in den Behandlungsraum (2) als auch das Ausbringen der Behälter (1) aus dem Behandlungsraum (2) bewerkstelligt und dass am Umlaufbereich des einzigen Schleusenrads (4) mindestens vier synchron zu diesem mit entgegengesetztem Drehsinn antreibbare Sternräder (17 bis 20) angeordnet sind, zwei außerhalb und zwei innerhalb des Behandlungsraums (2), welche die Behälter (1) teilungsgerecht an die Greifer (6) des Schleusenrads (4) übergeben bzw. teilungsgerecht von den Greifern (6) des Schleusenrads (4) übernehmen.

10. Vorrichtung nach Anspruch 9, **dadurch gekennzeichnet, dass** die außerhalb der Behandlungskammer (2) angeordneten Sternräder (17, 20) außer mit dem Schleusenrad (4) mit einem Zuförderer (21) für die unbehandelten Gefäße und einem Abförderer (22) für die behandelten Gefäße (1) zusammenwirken, während die beiden innerhalb des Behandlungsraums (2) angeordneten Sternräder (18, 19) mit einem die Behälter (1) durch den Behandlungsraum (2) transportierenden Förderer (23) zusammenwirken.

11. Vorrichtung nach Anspruch 9 oder 10, **dadurch gekennzeichnet, dass** die Sternräder (17 bis 20) mit unmittelbar durch die Behälter (1) und/oder mittelbar durch eine Steuereinrichtung betätigbaren Klammern (24) versehen sind, die vorzugsweise in einem anderen Umfangsbereich der Behälter (1) angreifen als die Greifer (6) des Schleusenrads (4).

12. Vorrichtung nach Anspruch 11, **dadurch gekennzeichnet, dass** jede Klammer (24) mindestens zwei nach Art einer Schere angeordnete Schwenkarme (25, 26) aufweist, die im wesentlichen parallel zur Umlaufebene des Schleusenrads (4) angeordnet sind und zumindest teilweise vorübergehend in dessen Schleusenkammern (3) eintauchen.

13. Vorrichtung nach Anspruch 12, **dadurch gekennzeichnet, dass** zwischen den Schwenkarmen (25, 26) jeder Klammer (24) ein elastisches Mittel (27) angeordnet ist, welches die Schwenkarme (25, 26) im Schließsinne vorspannt, und dass am freien Ende der Schwenkarme (25, 26) abgeschrägte oder abgerundete Steuerflächen (28, 29) ausgebildet sind, welche bei einem Eindrücken eines Behälters (1) in die Klammer (24) diese entgegen der Kraft des elastischen Mittels (27) aufspreizen.

14. Vorrichtung nach einem der Ansprüche 11 bis 13, **dadurch gekennzeichnet, dass** die Klammern (24) mindestens eines Sternrads (17 bis 20) im wesentlichen radial und/oder im wesentlichen tangential gegenüber dessen Drehachse gesteuert bewegbar sind, so dass die radiale Position bzw. der gegenseitige Abstand und die Geschwindigkeit der Klammern (24) während einer Umdrehung des Sternrads (17 bis 20) zyklisch veränderbar sind.

15. Vorrichtung nach einem der Ansprüche 11 bis 15, **dadurch gekennzeichnet, dass** die Klammern (24) beim Transport von PET-Flaschen über dem am Kopfbereich vorgesehenen Tragring oder Halskragen (7) angreifen.

## Claims

1. Device for bringing in and/or removing containers (1) to/from a treatment room with at least one rotatable lock wheel (4) provided with outwardly open lock chambers (3) on its periphery for the containers, **characterised in that** the lock wheel (4) is provided with grippers (6) capable of actuation directly by the containers (1) and/or indirectly by a control arrangement (5), which temporarily fix the containers in the lock chambers (3).

2. Device according to Claim 1, **characterised in that** the grippers (6) are so arranged that when transporting PET bottles, these are held without floor support hanging in the lock chambers (3), preferably without contact with the chamber walls.

3. Device according to Claim 1 or 2, **characterised in that** each gripper (6) has at least two pivoting levers (8, 9) arranged in the manner of gripping tongs, which are arranged substantially parallel to the circulation plane of the lock wheel (4) and which at least partially protrude into the associated lock chamber (3).

4. Device according to Claim 3, **characterised in that** between the pivoting levers (8, 9) of each gripper (6), a rotatable controlling cam (10) and an elastic means (11) are arranged, which together bring about the opening and/or closing movement of the grippers (6).

5. Device according to Claim 3 or 4, **characterised in that** the pivoting levers (8, 9) of a gripper (6) are supported on a support plate (12), which in turn is preferably removably attached to the lock wheel (4) in the region of the inner wall of the associated pocket (3).

6. Device according to Claim 4 or 5, **characterised in that** the controlling cams (10) are opened and/or closed by trips (13 to 16) arranged stationary on the circulation path of the lock wheel (4), whereby the grippers (6) are stabilised in the circulation region between the trips (13 to 16) by the controlling cams (10) and/or the elastic means (11) in their opening and closing position.

7. Device according to one of the claims 1 to 6, **characterised in that** the grippers (6) are so arranged that when transporting PET bottles they grasp the circumferential region of the containers (1) with positive engagement and/or force-closed, preferably in the neck or head region.

8. Device according to Claim 7, **characterised in that** the grippers (6), when transporting PET bottles (1) engage underneath a supporting ring or neck collar (7) provided in the head region.

9. Device according to one of the claims 1 to 8, **characterised in that** a single lock wheel (4) is provided, which effects both the bringing of the containers (1) into the treatment room (2) and the removal of the containers (1) from the treatment room (2) and that in the circulation region of the single lock wheel (4), at least four star wheels (17 to 20) are arranged, capable of being driven synchronously with this in opposed rotation, two outside and two within the treatment room (2), which pass the containers (1) correctly spaced to the grippers (6) of the lock wheel (4) or accept them correctly spaced from the grippers (6) of the lock wheel (4).

10. Device according to Claim 9, **characterised in that** the star wheels (17, 20) arranged outside the treatment chamber (2) interact, as well as with the lock wheel (4), with a feeding conveyor (21) for the untreated containers and a removal conveyor (22) for the treated containers (1), while the two star wheels (18, 19) arranged inside the treatment room (2) interact with a conveyor (23) transporting the containers (1) through the treatment room (2).

11. Device according to Claim 9 or 10, **characterised in that** the star wheels (17 to 20) are provided with clamps (24) actuated directly by the containers (1) and/or indirectly by a control arrangement, which preferably engage in another circumferential region of the containers (1) than the grippers (6) of the lock wheel (4).

12. Device according to Claim 11, **characterised in that** each clamp (24) has at least two pivoting arms (25, 26) arranged in the manner of a pair of scissors, arranged substantially parallel to the circulation plane of the lock wheel (4) and temporarily inserted, at least partially, into its lock chambers (3).

13. Device according to Claim 12, **characterised in that** between the pivoting arms (25, 26) of each clamp (24) is arranged an elastic means (27) which pre-tensions the pivoting arms (25, 26) in the closing direction, and that at the free end of the pivoting arms (25, 26) inclined or rounded control surfaces (28, 29) are formed, which when a container (1) is pressed into the clamps (24), prise them apart against the force of the elastic means (27).

14. Device according to one of the claims 11 to 13, **characterised in that** the clamps (24) of at least one star wheel (17 to 20) are movable under control substantially radially and/or substantially tangentially relative to its rotation axis, so that the radial position or the mutual separation and speed of the clamps (24) are changeable cyclically during a rotation of the star wheel (17 to 20).

15. Device according to one of the claims 11 to 14, **characterised in that** on transporting PET bottles, the clamps (24) engage with the support ring or neck collar (7) provided in the head region.

## Revendications

1. Dispositif pour introduire et/ou dégager des récipients (1) dans ou à partir d'une enceinte de traitement, comprenant au moins une roue alvéolaire (4), rotative, ayant à sa périphérie des alvéoles (3), ouvertes vers l'extérieur pour les récipients,
**caractérisé en ce que**
la roue alvéolaire (4) est munie d'organes de préhension (6) actionnés directement par les récipients (1) et/ou indirectement par une installation de commande (5), ces organes de préhension bloquant provisoirement les récipients dans les alvéoles (3).

2. Dispositif selon la revendication 1,
**caractérisé en ce que**
les organes de préhension (6) sont installés pour qu'au transport de bouteilles en polyéthylène PET, celles-ci soient tenues suspendues dans les alvéoles (3) sans s'appuyer par le fond, de préférence sans contact avec les parois des alvéoles.

3. Dispositif selon l'une quelconque des revendications 1 ou 2,
**caractérisé en ce que**
chaque organe de préhension (6) comporte au moins deux leviers pivotants (8, 9) à la manière d'une pince, installés essentiellement parallèlement au plan de circulation de la roue alvéolaire (4) et pénétrant au moins en partie dans l'alvéole (3) correspondante.

4. Dispositif selon la revendication 3,
**caractérisé en ce qu'**
entre les leviers pivotants (8, 9) de chaque organe de préhension (6) il y a une came de commande (10) rotative et un moyen élastique (11) qui produisent en coopération, le mouvement d'ouverture et/ou de fermeture des organes de préhension (6).

5. Dispositif selon l'une quelconque des revendications 3 ou 4,
**caractérisé en ce que**
les leviers pivotants (8, 9) d'un organe de préhension (6) sont montés sur une plaque d'appui (12) elle-même fixée de préférence de manière amovible sur la roue alvéolaire (4) dans la zone de la paroi intérieure de l'alvéole (3) correspondante.

6. Dispositif selon l'une quelconque des revendications 4 ou 5,
**caractérisé en ce que**
les cames de commande (10) sont ouvertes et/ou fermées par des butées (13-16) prévues de manière fixe sur la trajectoire périphérique de la roue alvéolaire (4), et les organes de préhension (6) sont stabilisés dans la zone de circulation entre les butées (13-16) par les cames de commande (10) et/ou les moyens élastiques (11) dans leur position d'ouverture ou de fermeture.

7. Dispositif selon l'une quelconque des revendications 1 à 6,
**caractérisé en ce que**
les organes de préhension (6) sont installés pour qu'au transport de bouteilles PET, ils agissent par une liaison de forme et/ou de force avec la zone périphérique des récipients (1), de préférence dans la zone du col ou de la tête.

8. Dispositif selon la revendication 7,
**caractérisé en ce que**
les organes de préhension (6) agissent, lors du transport de bouteilles PET (1), en dessous d'un anneau de support ou d'une collerette (7) sur la zone de tête.

9. Dispositif selon l'une des revendications 1 à 8,
**caractérisé en ce qu'**
une unique roue alvéolaire (4) assure à la fois l'introduction des récipients (1) dans le volume de traitement (2) et l'extraction des récipients (1) de ce volume (2), et dans la zone périphérique de l'unique roue alvéolaire (4), au moins quatre roues-étoiles (17-20), entraînées en synchronisme avec cette roue alvéolaire et en sens de rotation opposé, deux roues à l'extérieur et deux à l'intérieur de l'enceinte de traitement (2), transfèrent les récipients (1), au pas correct vers les organes de préhension (6) de la roue alvéolaire (4) ou les prennent au pas correct des organes de préhension (6) de la roue alvéolaire (4).

10. Dispositif selon la revendication 9,
**caractérisé en ce que**
les roues-étoiles (17, 20) situées à l'extérieur de l'enceinte de traitement (2), coopèrent, en plus de la roue alvéolaire (4), avec un convoyeur d'alimentation (21) pour les récipients non traités et un convoyeur d'évacuation (22) pour les récipients traités (1), alors que les deux roues-étoiles (18, 19) à l'intérieur de l'enceinte de traitement (2), coopèrent avec un convoyeur (23) qui transporte les récipients (1) à travers l'enceinte de traitement (2).

11. Dispositif selon l'une quelconque des revendications 9 ou 10,
**caractérisé en ce que**
les roues-étoiles (17-20) sont munies de pinces (24) actionnées directement par des récipients (1) et/ou indirectement par une installation de commande, les pinces agissant de préférence dans une autre zone périphérique des récipients (1) autre que celles des organes de préhension
(6) de la roue alvéolaire (4).

12. Dispositif selon la revendication 11,
**caractérisé en ce que**
chaque pince (24) comporte au moins deux bras pivotants (25, 26) installés à la manière d'une paire de ciseaux, et ces bras sont essentiellement parallèles au plan de circulation de la roue alvéolaire (4) et pénètrent au moins partiellement, provisoirement dans les alvéoles (3) de cette roue.

13. Dispositif selon la revendication 12,
**caractérisé en ce qu'**
un moyen élastique (27) prévu entre les bras pivotants (25, 26) de chaque pince (24), assure la précontrainte des bras (25, 26) dans le sens de fermeture, et l'extrémité libre des bras pivotants (25, 26) a des surfaces de commande inclinées ou arrondies (28, 29) qui, lors de l'enfoncement d'un récipient (1) dans la pince (24), ouvrent les bras contre la force du moyen élastique (27).

14. Dispositif selon l'une quelconque des revendications 11 à 13,
**caractérisé en ce que**
les pinces (24) d'au moins une roue-étoile (17-20) sont mobiles de manière commandée essentiellement dans la direction radiale et/ou essentiellement dans la direction tangentielle par rapport à l'axe de rotation pour que la position radiale ou la distance réciproque et la vitesse des pinces (24) varient de manière cyclique pendant une rotation de la roue-étoile (17-20).

15. Dispositif selon l'une quelconque des revendications 11 à 14,
**caractérisé en ce que**
les pinces (24) agissent sur l'anneau de support ou la collerette (7) prévue dans la zone de tête pour le transport de bouteilles PET.
